# EUROPÄISCHE PATENTANMELDUNG

(11) **EP 4 277 092 A1**
(43) Veröffentlichungstag der Anmeldung: **15.11.2023**
(21) Anmeldenummer: 23155374.4
(22) Anmeldetag: 07.02.2023
(51) Int. Cl.: H02K 11/21, B62D 5/00, H02K 11/33, B62D 5/04

(54) **ELEKTROMOTOR UND STEER-BY-WIRE-LENKUNG MIT EINEM SOLCHEN**

(30) Priorität: 09.05.2022 DE 102022204530
(71) Anmelder: VOLKSWAGEN AG, 38440 Wolfsburg (DE)
(72) Erfinder: Leibel, Wassili, 29640 Schneverdingen (DE); Traue, Mirko, 32479 Hille (DE); Kreis, Christopher, 38126 Braunschweig (DE); Schumann, Heiko, 38116 Braunschweig (DE)

(57) **Zusammenfassung**

Ein Elektromotor (13) umfasst einen Rotor (131), eine Steuerungsplatine (135), auf welcher Einrichtungen zur Steuerung des Elektromotors (13) angeordnet und elektrisch kontaktiert sind, eine Multiturnsensoreinrichtung (136), die zwischen der Steuerungsplatine (135) und dem Rotor (131) angeordnet ist, wobei die Multiturnsensoreinrichtung (136) mindestens einen Messaufnehmer (13631,1364) aufweist, der an der Steuerungsplatine (135) angeordnet und elektrisch kontaktiert ist. Weiterhin angegeben ist eine Steer-by-wire-Lenkung (1) mit einem Lenksäulenmodul (10), welches eine Lenkungshandhabe (11) zur Eingabe eines fahrerseitigen Lenkbefehls und einen mit dieser mechanisch gekoppelten Haptikaktuator (12) zur Simulation einer Lenkungsrückwirkung an der Lenkungshandhabe (11) aufweist, wobei der Haptikaktuator (12) den vorgenannten Elektromotor (13) umfasst.

## Beschreibung

Die Erfindung bezieht sich auf das Gebiet der Kraftfahrzeugtechnik. Insbesondere bezieht sich die Erfindung auf einen Elektromotor sowie eine Steer-by-wire-Lenkung mit einem solchen.

In einer Steer-by-wire-Lenkung entfällt die bei herkömmlichen Lenkungen vorhandene mechanische Kopplung zwischen einer Lenkungshandhabe, beispielsweise einem Lenkrad, und einem Lenkgetriebe oder Radaktuator. Erforderliche Befehle zwischen der Lenkungshandhabe und dem Radaktuator werden lediglich elektrisch oder gegebenenfalls auch kabellos übertragen. Durch den Entfall der mechanischen Kopplung könnte sich die Lenkungshandhabe ohne weitere Maßnahmen praktisch rückwirkungsfrei bewegen. Ein sich nahezu ohne Widerstand stets gleichermaßen leicht drehbares Lenkrad wäre für einen mit einer herkömmlichen Lenkung mit mechanischer Kopplung vertrauten Fahrer jedoch stark gewöhnungsbedürftig. Zudem bedeutet der Entfall der mechanischen Kopplung, dass praktisch jedwede Rückmeldung von der Fahrbahn an der Lenkungshandhabe verloren ginge. Aus diesem Grunde wird ein Aktuator mit der Lenkungshandhabe gekoppelt, welcher an der Lenkungshandhabe eine Lenkungsrückmeldung simuliert, d.h. künstlich erzeugt, und damit eine für den Fahrer spürbare Haptik der Lenkung einstellt. Ein solcher Aktuator, der einen Elektromotor umfasst, wird im Folgenden daher auch als Haptikaktuator bezeichnet. Gebräuchlich ist auch die Bezeichnung Force-Feedback-Aktuator.

Beim Betrieb eines solchen Haptikaktuators soll eine feste Zuordnung zwischen der Stellung der Lenkungshandhabe, beispielsweise einem Lenkradwinkel, und der Stellung der Fahrzeugräder, beispielsweise repräsentiert durch die Stellung einer Lenkstange des Lenkgetriebes, gewährleistet werden. Da diese Zuordnung mangels mechanischer Kopplung nicht fest ist, könnte sich diese im Laufe des Betriebs eines Kraftfahrzeugs mit der Zeit verändern. Außerdem kann die Zuordnung bei ausgeschaltetem System durch passive Bewegung der Lenkstange oder Bewegung der Lenkungshandhabe verloren gehen. Eine Bestimmung der aktuellen absoluten Stellung der Lenkungshandhabe ist jedoch erforderlich, um den Lenkbefehl des Fahrers korrekt an das Lenkgetriebe übermitteln zu können.

Herkömmliche Haptikaktuator mit Elektromotor weisen dazu zu üblicherweise eine Rotorlagensensorik auf, wie dies beispielsweise in DE 102 26 988 A1 beschrieben ist. Die Rotorlage korrespondiert nämlich mit der Stellung der Lenkungshandhabe. Weitere diesbezüglich geeignete Sensorik ist aus DE 10 2009 031 176 A1 und DE 103 29 292 A1 bekannt.

Üblicherweise werden im Rahmen der Rotorlagensensorik sogenannte Singleturn-Sensoren eingesetzt, da diese verhältnismäßig kostengünstig sind. Solche Drehgeber weisen einen Messbereich von 360° (eine Umdrehung) auf. Wird ein Singleturn-Sensor um mehr als 360° gedreht, entsprechen die Ausgabesignale der weiteren Umdrehungen wieder jenen der ersten Umdrehung. Es ist also nicht möglich, mit einem einzigen Singleturn-Sensor einen Messbereich von mehr als 360° abzudecken, wie er jedoch für herkömmliche Lenkungen mit zumeist 1440° erforderlich ist. Letzteres kann durch den Einsatz mehrerer Singleturn-Sensoren und Kopplung derselben über ein Getriebe, beispielsweise unter Anwendung des Nonius-Prinzips, erzielt werden. Auf diese Weise lässt sich mithilfe mehrerer Singleturn-Sensoren eine Multiturn-Messtechnik realisieren, so dass eine Drehstellung über 360° hinaus zuverlässig bestimmt werden kann.

An einem Kraftfahrzeug ist in Bezug auf die Erfassung der Stellung der Lenkungshandhabe zudem eine True-Power-On Funktion erforderlich. Die betreffende Stellungsinformation soll also auch bei Unterbrechung der Stromversorgung erhalten bleiben. Dies lässt sich ebenfalls durch Einsatz mehrerer über ein Getriebe gekoppelter Singleturn-Sensoren erzielen.

Der vorliegenden Erfindung liegt die Aufgabe zugrunde, eine solche True-Power-On Multiturn-Messtechnik mit möglichst geringem Aufwand und geringer Störungsanfälligkeit in einen Haptikaktuator einer Steer- by-wire Lenkung eines Kraftfahrzeugs zu implementieren.

Diese Aufgabe wird zunächst durch einen Elektromotor gemäß Patentanspruch 1 gelöst, welcher in einem Haptikaktuator einer Steer-by-wire Lenkung einsetzbar ist. Der erfindungsgemäße Elektromotor umfasst einen Rotor, eine Steuerungsplatine, auf welcher Einrichtungen zur Steuerung des Elektromotors angeordnet und elektrisch kontaktiert sind, und eine Multiturnsensoreinrichtung, die zwischen der Steuerungsplatine und dem Rotor angeordnet ist, wobei die Multiturnsensoreinrichtung mindestens einen Messaufnehmer aufweist, der an der Steuerungsplatine angeordnet und elektrisch kontaktiert ist.

Die erfindungsgemäße Lösung vermeidet die Notwendigkeit eines dezidierten Sensorkabels zwischen einem Sensor und einem Steuergerät, wodurch mögliche Fehlerursachen ausgeschlossen werden können. Aufgrund der Integration der Rotorlagensensorik in die Steuerungsplatine des Elektromotors kann eine gesonderte Leiterplatte für entsprechende Sensorik und Signalverarbeitung entfallen und Bauraum eingespart werden. Überdies ermöglicht die erfindungsgemäße Anordnung einen guten Schutz der Rotorlagensensorik gegen Umgebungseinflüsse, woraus insgesamt eine besonders einfache, robuste und kostengünstige Konstruktion resultiert.

Besondere Ausführungsarten der Erfindung sind Gegenstand weiterer Patentansprüche.

Beispielsweise kann der Rotor mit einer Motorwelle drehfest verbunden sein, welche an einem Lagerschild mittels eines Motorwellenlagers drehbar gelagert ist. Dabei ist die Multiturnsensoreinrichtung zwischen dem Lagerschild und der Steuerungsplatine angeordnet. Dies begünstigt eine stabile Lagerung der Sensorik der Multiturnsensoreinrichtung.

Gemäß einer weiteren besonderen Ausführungsart der Erfindung weist die Multiturnsensoreinrichtung mindestens zwei Singleturn-Sensoren auf, vorzugsweise genau zwei Singleturn-Sensoren, deren Messaufnehmer jeweils auf der Steuerungsplatine angeordnet sind, und deren Messgeber mittels eines Getriebes derart gekoppelt sind, dass deren Übersetzungsverhältnis zum Rotor untereinander verschieden ist. Hierdurch lässt sich mittels kostengünstiger Singleturn-Sensoren eine Multiturn-Messtechnik wie eingangs erläutert verwirklichen.

Im Hinblick auf die Ausfallsicherheit können mindestens zwei der Singleturn-Sensoren auf untereinander unterschiedlichen Messprinzipien basieren, so dass bei Ausfall eines Sensors aus dem anderen immer noch eine Information über die Rotorlage gewonnen werden kann. Dem liegt die Überlegung zugrunde, dass ein Ausfall zweier gleichartiger Sensoren aufgrund einer Fehlerursache wahrscheinlicher ist, als der Ausfall von zwei Sensoren, welche auf unterschiedlichen Messprinzipien beruhen.

Insbesondere können ein erster Messgeber an einer mit dem Rotor drehfest verbundenen Motorwelle angeordnet sein und ein zweiter Messgeber an einer zu der Motorwelle parallelen Sensorwelle angeordnet sein, wobei die Motorwelle und die Sensorwelle über das Getriebe miteinander gekoppelt sind. Hierdurch bleibt der Aufbau der Multiturnsensoreinrichtung sehr einfach.

Das Getriebe kann vorzugsweise einstufig ausgeführt sein, wodurch dessen Aufbau einfach und dessen Abmessungen kompakt bleiben. Es kann jedoch auch mehrstufig, beispielsweise zweistufig ausgeführt sein. Möglich sind auch zwei oder mehr einstufige Teilgetriebe.

Gemäß einer weiteren besonderen Ausführungsart weist das Getriebe mindestens eine Stirnzahnradstufe oder eine Riemenradstufe auf, welche sich besonders platzsparend an dem Elektromotor unterbringen lässt.

Vorzugsweise ist das Getriebe zwischen dem Lagerschild und der Steuerungsplatine angeordnet, so dass für die Getriebeglieder kurze Abstände zur jeweiligen Lagerung vorgesehen werden können. Dies wirkt sich positiv auf Genauigkeit der Rotorlageerfassung aus.

Gemäß einer weiteren Ausführungsvariante kann die Multiturnsensoreinrichtung einen absoluten Multiturn-Sensor aufweisen, welcher auf dem Wiegand-Effekt beruht, wodurch gegebenenfalls bereits mittels eines einzigen Sensors eine True-Power-On Funktion realisiert werden kann.

Gemäß einer weiteren besonderen Ausführungsart der Erfindung ist eine Motorphasen-Kontaktiereinrichtung zwischen dem Lagerschild und dem Rotor angeordnet und mit der Steuerungsplatine durch elektrische Leitereinrichtungen elektrisch verbunden.

Ein Elektromotor der vorstehend erläuterten Bauart kann vorzugsweise in einer Steer-by-wire-Lenkung gemäß Patentanspruch 9 zum Einsatz kommen. Letztere umfasst ein Lenksäulenmodul, welches eine Lenkungshandhabe zur Eingabe eines fahrerseitigen Lenkbefehls und einen mit dieser mechanisch gekoppelten Haptikaktuator zur Simulation einer Lenkungsrückwirkung an der Lenkungshandhabe aufweist. Dabei umfasst der Haptikaktuator einen Elektromotor der vorstehend erläuterten Bauart. Aufgrund seiner Konfiguration ist der Elektromotor insbesondere auch hinsichtlich seiner Rotorlagensensorik für den Betrieb in einem Kraftfahrzeug ausreichend robust.

Gemäß einer besonderen Ausführungsart der Steer-by-wire-Lenkung ist die Lenkungshandhabe an einem der Steuerungsplatine gegenüberliegenden Ende des Elektromotors angekoppelt. Dies ermöglicht einen sehr flexiblen Anbau des Haptikaktuators am Lenksäulenmodul. Insbesondere kann die Motorwelle achsparallel zu einer mit der Lenkungshandhabe gekoppelten Welle, koaxial zu Letzterer, im rechten Winkel oder auch windschief zu derselben angeordnet sein, so dass den jeweiligen räumlichen Gegebenheiten eines Kraftfahrzeugs Rechnung getragen werden kann.

Gemäß einer besonderen Ausführungsart ist Lenkungshandhabe mit dem Elektromotor mittels einer Welle gekoppelt, die koaxial zur Motorwelle des Elektromotors verläuft. Die Motorwelle kann dabei entweder als Vollwelle oder als Hohlwelle ausgeführt sein. Dabei ist eine Umkehrung der Anordnung des Elektromotors in Bezug auf die Lage der Lenkungshandhabe möglich.

Nachfolgend wird die Erfindung anhand eines dargestellten Ausführungsbeispiels näher erläutert. Die Zeichnung zeigt in:
- Figur 1: eine schematische Ansicht einer Steer-by-wire-Lenkung,
- Figur 2: eine räumliche Darstellung eines Lenksäulenmoduls einer Steer-by-wire Lenkung mit einem Elektromotor nach einem Ausführungsbeispiel der Erfindung,
- Figur 3: eine Längsschnittansicht des Elektromotors aus Figur 2,
- Figur 4: eine Querschnittsansicht des Elektromotors entlang der Linie IV-IV in Figur 2, und in
- Figur 5: verschiedene Anordnungsmöglichkeiten des Elektromotors in einem Lenksäulenmodul in Bezug auf eine Welle einer Lenkungshandhabe.

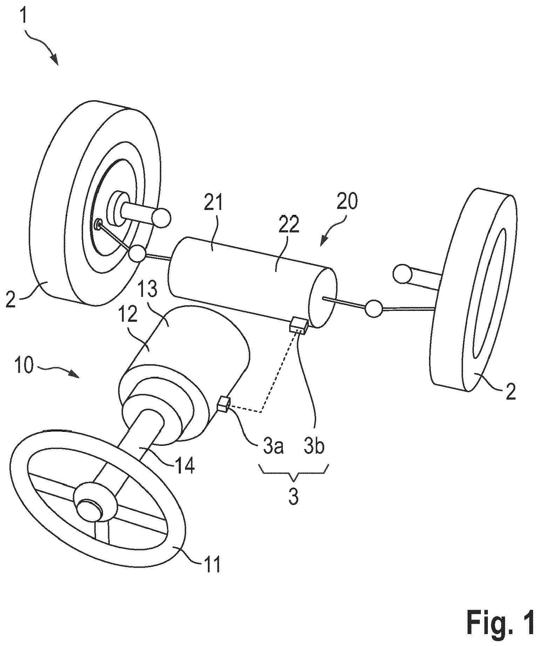

Fig. 1 zeigt eine schematische Ansicht eines Beispiels einer Steer-by-Wire-Lenkung 1 für ein Kraftfahrzeug, insbesondere Personenkraftfahrzeug oder leichtes Nutzfahrzeug.

Die Steer-by-Wire-Lenkung 1 ist in ein Lenksäulenmodul 10 zur Eingabe eines fahrerseitigen Lenkbefehls und ein Lenkgetriebemodul 20 unterteilt, welche mechanisch voneinander entkoppelt sind.

Das Lenksäulenmodul 10 der Steer-by-wire-Lenkung 1 umfasst zunächst eine Lenkungshandhabe 11 zur Eingabe des Lenkbefehls durch einen Fahrer des Kraftfahrzeugs. Die Lenkungshandhabe 11 ist beispielsweise ein Lenkrad wie dargestellt, kann jedoch auch ein anderes Eingabemittel wie ein Joystick oder dergleichen sein. Im Fall eines Lenkrads ist der Lenkbefehl ein Lenkradwinkel. Zudem können im Lenkbefehl optional die Lenkradwinkelgeschwindigkeit und/oder Lenkradwinkelbeschleunigung berücksichtigt sein.

Ferner umfasst das Lenksäulenmodul 10 der die Steer-by-wire-Lenkung 1 einen Haptikaktuator 12, der mit der Lenkungshandhabe 11 mechanisch gekoppelt ist. Der Haptikaktuator 12 dient dazu, für den Fahrer an der Lenkungshandhabe 11 eine Lenkungsrückwirkung zu simulieren. Diese äußert sich in einem Widerstand beim Lenken sowie gegebenenfalls auch einer aktiven Rückstellung der Lenkungshandhabe 11 in eine Neutralstellung entsprechend Geradeausfahrt auf ebenem Untergrund.

Der Haptikaktuator 12 umfasst einen Elektromotor 13, der mit der Lenkungshandhabe 11 mittels einer Welle 14, gegebenenfalls unter Zwischenschaltung eines Getriebes 15, mechanisch gekoppelt ist. Zudem ist an dem Lenksäulenmodul 10 ein in Fig. 1 nicht näher dargestelltes Steuergerät zur Steuerung des Elektromotors 13 vorgesehen, auf welches weiter unten noch näher eingegangen wird.

Das Lenkgetriebemodul 20 der Steer-by-wire-Lenkung 1 umfasst einen Radaktuator 21 zur Einstellung eines Lenkwinkels an lenkbaren Fahrzeugrädern 2 des Kraftfahrzeugs. Der Radaktuator 21 kann durch separate Einzelantriebe für die Fahrzeugräder 2 gebildet sein. Bei dem vorliegenden Ausführungsbeispiel ist zur Veranschaulichung für den Radaktuator 21 jedoch ein Lenkgetriebe 22 dargestellt, das mit den gelenkten Vorderrädern des Fahrzeugs gekoppelt ist. Als Antrieb für das Lenkgetriebe 22 dient ein weiterer Elektromotor oder eine sonstige fremdkraftbetriebene Antriebseinrichtung.

Kennzeichnend für eine Steer-by-wire-Lenkung 1 besteht vorliegend keine mechanische Kopplung von dem Radaktuator 21 zu der Lenkungshandhabe 11 und dem Haptikaktuator 12. Zur Verknüpfung des Radaktuators 21 mit der Lenkungshandhabe 11 und dem Haptikaktuator 11 umfasst die Steer-by-wire-Lenkung 1 Steuerungsmittel 3, die derart konfiguriert sind, um in Abhängigkeit des fahrerseitigen Lenkbefehls den Radaktuator 21 zur Bewirkung einer Lenkbetätigung der Fahrzeugräder 2 zu veranlassen sowie den Haptikaktuator 12 zur Erzeugung einer Lenkungsrückwirkung an der Lenkungshandhabe 11 zu veranlassen.

Die Verknüpfung kann elektrisch kabelgebunden oder auch kabellos vorgenommen sein.

Die Steuerungsmittel 3 können in einem zentralen Steuergerät konzentriert oder auf verschiedene Steuergeräte 3a und 3b am Haptikaktuator 12 und am Radaktuator 21 verteilt, wie dargestellt, oder in anderer Weise angeordnet sein.

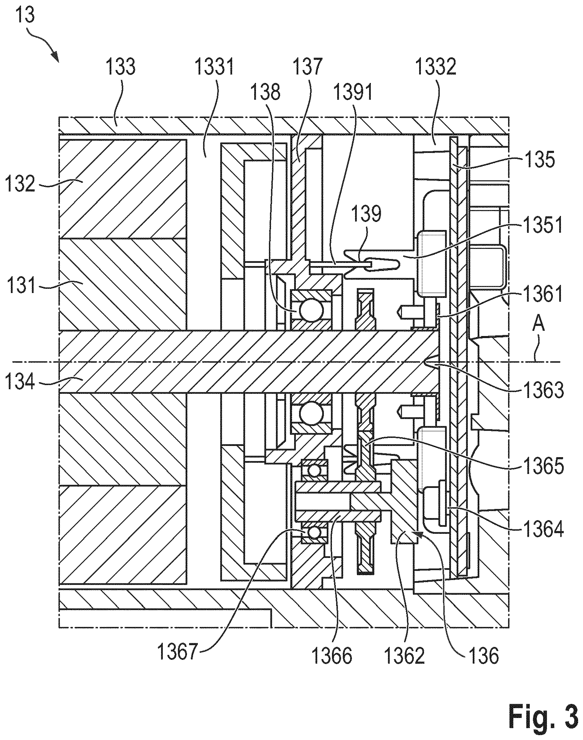

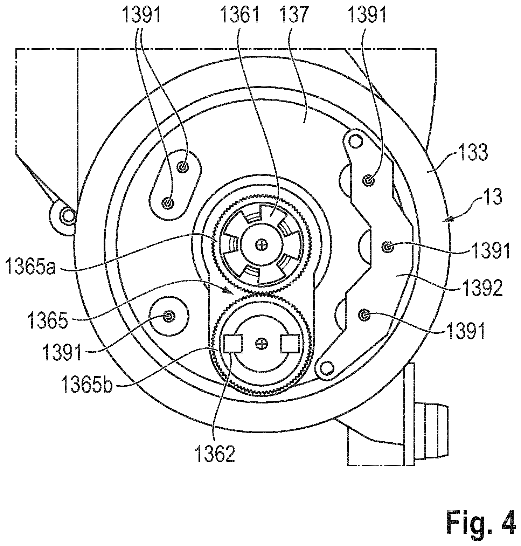

Zur Erfassung eines Lenkbefehls des Fahrers sowie weiterhin zur Darstellung der Lenkungsrückwirkung wird eine Information über die Lage eines Rotors 131 des Elektromotors 13 benötigt. Dieser Elektromotor 13 ist in den Fig. 3 und 4 in Form eines möglichen Beispiels näher dargestellt und soll nachfolgend näher erläutert werden.

Der Elektromotor 13 weist neben dem Rotor 131 weiterhin einen Stator 132 auf. Beide können wie in Fig. 3 beispielhaft dargestellt in einem Motorgehäuse 133 angeordnet sein. In Fig. 3 ist weiterhin eine Motorwelle 134 zu erkennen, über welche der Rotor 131 im Motorgehäuse 133 drehbar gelagert ist. Die Motorwelle 134 ist drehfest mit dem Rotor 131 verbunden verläuft dabei koaxial zum Rotor 131 sowie auch zum Stator 132. Im Kontext des dargestellten Haptikaktuators 12 ist diese Motorwelle 134 entweder unmittelbar oder unter Zwischenschaltung eines Getriebes mit einer zur Lenkungshandhabe 11 führenden Welle 14 gekoppelt.

Der Elektromotor 13 umfasst weiterhin eine Platine, insbesondere Steuerungsplatine 135 als Teil des Steuergeräts 3a auf Seiten des Lenksäulenmoduls 10. Auf dieser Steuerungsplatine 135 sind entsprechend Einrichtungen zur Steuerung des Elektromotors 13, beispielsweise unter anderem ein Mikrocontroller, angeordnet und elektrisch kontaktiert.

Bei dem dargestellten Ausführungsbeispiel ist die Steuerungsplatine 135 innerhalb des Motorgehäuses 133 angeordnet, und zwar stirnseitig des Rotors 131.

Weiterhin umfasst der Elektromotor 13 eine Multiturnsensoreinrichtung 136, die in Bezug auf die Drehachse A des Rotors 131 axial zwischen der Steuerungsplatine 135 und dem Rotor 131 angeordnet ist. Diese Multiturnsensoreinrichtung 136 weist mindestens einen Messaufnehmer 1361 auf, der an der besagten Steuerungsplatine 135 angeordnet und elektrisch kontaktiert ist. Durch die unmittelbare Anordnung des Messaufnehmers 1361 an der Steuerungsplatine 135 entfällt eine entsprechende Kabelverbindung zwischen dem zugehörigen Sensor und der Steuerungsplatine 135.

Zur Lagerung der Motorwelle 134 ist vorzugsweise ein Lagerschild 137 vorgesehen, welches innerhalb des Motorgehäuses 133 festgelegt werden kann. Dieses Lagerschild 137 unterteilt den Innenraum des Motorgehäuses 133 in eine erste Kammer 1331, in welcher der Rotor 131 und der Stator 132 angeordnet sind, sowie eine zweite Kammer 1332, in welcher die Steuerungsplatine 135 und die Multiturnsensoreinrichtung 136 aufgenommen sind. Das Lagerschild 137 bildet hier eine Trennwand welche diese beiden Kammern 1331, 1332 gegeneinander abgrenzt. Die Multiturnsensoreinrichtung 136 befindet sich dabei zwischen dem Lagerschild 137 und der Steuerungsplatine 135.

An dem Lagerschild 137 ist ein Motorwellenlager 138 angeordnet, beispielsweise in Form eines Wälzlagers oder Gleitlagers, über welches die sich durch das Lagerschild 137 hindurch erstreckende Motorwelle 134 drehbar an dem Lagerschild 137 und damit drehbar in dem Motorgehäuse 133 gelagert ist.

Weiterhin ist in Fig. 3 eine Motorphasen-Kontaktiereinrichtung 139 zu erkennen, welche zwischen dem Lagerschild 137 einerseits und dem Rotor 131 und Stator 132 andererseits angeordnet ist und dazu dient, zumindest den Stator 132 mit Strom zu versorgen. Die Motorphasen-Kontaktiereinrichtung 139 ist mit der Steuerungsplatine 135 durch elektrische Leitereinrichtungen 1391 elektrisch verbunden. Als elektrische Leitereinrichtungen 1391 sind vorliegend Kontaktierungselemente, beispielsweise in Form von Kontaktstäben, für die einzelnen Phasen des Elektromotors 13 dargestellt, welche an dem Lagerschild 137 vorbeigeführt und an Kontaktierungsklemmen 1351 der Steuerungsplatine 135 angeschlossen sind. Die elektrischen Leitereinrichtungen 1391 können, wie in Figur 4 zu erkennen, an einem gemeinsamen Halter 1392 abgestützt sein, welcher seinerseits an dem Lagerschild 137 befestigt ist.

Die in der zweiten Kammer 1332 axial zwischen dem Lagerschild 137 und der Steuerungsplatine 135 angeordnete Multiturnsensoreinrichtung 136 kann in unterschiedlicher Art und Weise ausgeführt sein.

Bei dem dargestellten Ausführungsbeispiel weist die Multiturnsensoreinrichtung 136 mindestens zwei Singleturn-Sensoren 1361/1363 und 1362/1364 auf, welche über ein Getriebe 1365 miteinander gekoppelt sind. Vorliegend sind in einer bevorzugten Ausführungsvariante genau zwei Singleturn-Sensoren dargestellt. Es ist jedoch möglich, diese um weitere Singleturn-Sensoren, beispielsweise mit jeweils einem Getrieberad zu ergänzen.

Die Messaufnehmer 1361 und 1362 dieser Singleturn-Sensoren sind jeweils auf der Steuerungsplatine 135 angeordnet und dort vorzugsweise ohne Zwischenschaltung eines Kabels unmittelbar kontaktiert. Die zugehörigen Messgeber 1363 und 1364 sind mittels des besagten Getriebes 1365 derart gekoppelt, dass deren Übersetzungsverhältnis zum Rotor 131 untereinander verschieden ist. Dies hat zur Folge, dass sich die Messgeber 1363 und 1364 bei einer Umdrehung des Rotors 131 unterschiedlich weit drehen. Daraus ergibt sich mit zunehmender Umdrehungszahl des Rotors 131 eine zunächst zunehmende Winkeldifferenz zwischen den an den beiden Singleturn-Sensoren erfassten Drehwinkeln. Aus dieser Diskrepanz kann dann auf die jeweilige Zahl der Umdrehungen geschlossen werden. In Verbindung mit der erfassten Drehstellung eines der beiden Messgeber 1363 und 1364 lässt sich dann in Kenntnis des Übersetzungsverhältnisses zum Rotor 131 die Lage des Rotors 131 eindeutig bestimmen. Die Übersetzungsverhältnisse werden dabei derart gewählt, dass die Beziehung für den interessierenden Messbereich stets eindeutig bleibt.

Wie Fig. 3 und 4 weitere entnommen werden kann, kann einer der Messgeber 1363, im Folgenden auch "erster Messgeber", unmittelbar an der mit dem Rotor 131 verbundenen Motorwelle 134 angeordnet sein, wohingegen der andere Messgeber 1364, im Folgenden auch "zweiter Messgeber", an einer zur Motorwelle 134 parallelen Sensorwelle 1366 angeordnet ist.

Die Sensorwelle 1366 ist über ein zusätzliches Sensorwellenlager 1367 drehbar an dem Lagerschild 137 gelagert.

Die Motorwelle 134 und die Sensorwelle 1366 sind über besagtes Getriebe 1365 miteinander gekoppelt, welches zwischen dem Lagerschild 137 und der Steuerungsplatine 135 liegt.

Bei dem dargestellten Ausführungsbeispiel ist als Getriebe 1365 beispielhaft eine einstufige Stirnzahnradstufe mit zwei Stirnzahnrädern 1365a und 1365b gezeigt, welche sich in ihrer Zähnezahl unterscheiden. In Abwandlung hiervon kann als Getriebe 1365 auch eine Riemenradstufe vorgesehen werden, welche in Axialrichtung der Drehachse des Elektromotors 13 wenig Bauraum benötigt. Jedoch sind grundsätzlich auch andere Getriebeformen einsetzbar.

In Figur 3 ist für den ersten Messgeber 1363 ein induktives Messprinzip und für den zweiten Messgeber 1364 ein magnetoresistive Messprinzip dargestellt. Jedoch prinzipiell jedes Messprinzip (magnetisch, magnetoresistiv, induktiv, kapazitiv, optisch, etc.) eingesetzt werden welches einen absolut messenden Singleturn-Sensor ermöglicht, wodurch in Kombination mit dem Getriebe 1365 eine Multiturnsensoreinrichtung 136, beispielsweise nach dem Noniusprinzip, verwirklicht werden kann. Durch die Verwendung unterschiedlicher Messprinzipien für die beiden Singleturn-Sensoren kann eine diversitäre Redundanz für die Rotorlagensensorik entwickelt werden, da prinzipiell über jeden der beiden Messgeber 1361 und 1362 grundsätzlich der Rotorlagewinkel des Elektromotors 13 ermittelt werden kann.

Da die Singleturn-Sensoren auch im Fall nach einer Spannungsunterbrechung jeweiliges Messsignal liefern, erfüllt die vorstehend erläuterte Multiturnsensoreinrichtung 136 auf Basis von mindestens zwei Singleturn-Sensoren die True-Power-On Funktion.

Die vorstehend erläuterte Ausgestaltung der Multiturnsensoreinrichtung 136 ist lediglich beispielhaft der Natur. Grundsätzlich kann eine Multiturnsensoreinrichtung 136 auch auf andere Art und Weise realisiert werden, solange diese innerhalb des Bauraums zwischen dem Lagerschild 137 und der Steuerungsplatine 135 aufgenommen werden kann.

Grundsätzlich kommt an dieser Stelle beispielsweise auch ein einzelner absolut messender Multiturn-Sensor in Betracht. Rein beispielsweise kann ein Multiturn-Sensor verwendet werden, welcher zur Stromversorgung eines entsprechenden Zählwerks den Wiegand-Effekt ausnutzt, wodurch ebenfalls die True-Power-On Funktion gewährleistet werden kann. Hierbei ist allerdings zu beachten, dass durch einen solchen Sensor die Gesamtlänge des Elektromotors 13 nicht merklich vergrößert werden soll.

Erfindungsgemäß wird die Multiturnsensoreinrichtung als Absolutwert-Sensoreinrichtung (absolut messender Sensor) in den Elektromotor 13 integriert und direkt mit der Steuerungsplatine 135 kontaktiert. Alle Risiken hinsichtlich der Verbindungsicherheit bei der Montage oder durch eine Lage außerhalb des Elektromotors der Montage gelangen hierdurch in Fortfall. Auch eine zusätzliche Sensorplatine ist nicht erforderlich.

Die vorstehend erläuterte Konfiguration des Elektromotors 13 insbesondere im Hinblick auf die Einbeziehung der Multiturnsensoreinrichtung 136 gestattet einen modularen Aufbau. Beispielsweise ist es möglich, das Getriebe 135 zusammen mit der Motorwelle 134 in das Motorgehäuse 133 einzubauen. Insbesondere können dabei die Motorwelle 134, das Lagerschild 137, die Multiturnsensoreinrichtung 136 sowie gegebenenfalls weiterhin die Steuerungsplatine 135 zu einer vormontierbaren Baueinheit zusammengefasst werden, welche nach dem Einbau von Rotor 131 und Stator 132 sowie gegebenenfalls der Motorphasen-Kontaktiereinrichtung 139 in das Motorgehäuse 133 montiert wird. Optional kann die Motorphasen-Kontaktiereinrichtung 139 auch der besagten vormontierbaren Baueinheit zugeordnet werden. Ferner kann die Steuerungsplatine 135 gegebenenfalls als separate Komponente nach dem Vorbau einer solchen Baueinheit in das Motorgehäuse 133 montiert werden.

Die Motorwelle 134 kann auch fest mit dem Rotor 131 verbunden sein. Eine Baugruppengestaltung kann eine Baugruppe "Motor" mit Rotor 131 und Motorwelle 134 aufweisen, ferner eine Unterbaugruppe Sensorgetriebe mit den Messgebern 1363/1364, die an die Baugruppe Motor montiert wird. Die Steuerungsplatine 135 mit den Messaufnehmern 1361/1362 gehört zu einer weiteren Baugruppe, die zu der Motor-Sensor-Baugruppe ausgerichtet und montiert werden kann.

Die erfindungsgemäße Konstruktion ist einfach, robust und kostengünstig. Insbesondere kommt diese mit wenigen, kostengünstigen Bauteilen aus, welche sich mit geringem Aufwand und Platzbedarf montieren lassen. Zudem ist die Multiturnsensoreinrichtung 136 innerhalb des Elektromotors 13 gut gegen äußere Einflüsse geschützt.

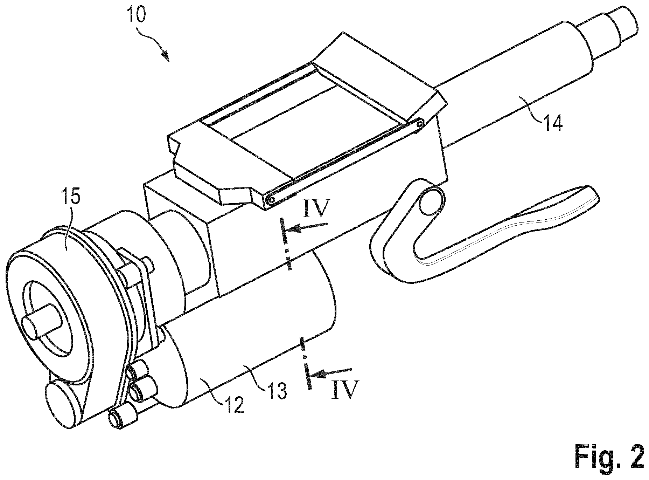

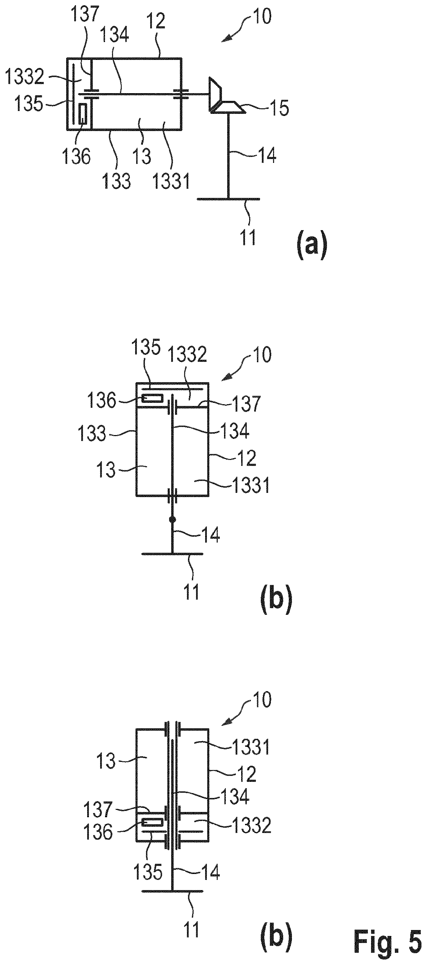

Der Elektromotor 13 kann auf unterschiedliche Art und Weise im Lenksäulenmodul 10 mit der Lenkungshandhabe 11 gekoppelt sein. Zusätzlich zu den in den Figuren 1 und 2 dargestellten Möglichkeiten sind beispielsweise auch Anordnungen wie in Fig. 5 a bis c möglich.

Neben einer achsparallelen Anordnung der Motorwelle 134 zu einer mit der Lenkungshandhabe 11 gekoppelten Welle 14 sind auch eine windschiefe oder rechtwinklige Anordnung wie in Fig. 5a oder eine koaxiale Anordnung wie in Fig. 5b und 5c möglich, um den jeweiligen räumlichen Gegebenheiten eines Kraftfahrzeugs Rechnung zu tragen.

Fig. 5a zeigt ein Beispiel für ein Getriebe 15 in Form einer Kegelradverzahnung. Möglich sind jedoch auch andere Getriebetypen, beispielsweise ein Schneckengetriebe oder eine Rack-Concentric- Anordnung.

Ein Anschluss ohne Getriebe 15 ist jedoch ebenfalls möglich, wie in Fig. 5b und 5c beispielhaft gezeigt ist.

Vorzugsweise ist die Lenkungshandhabe 11 an einem der Steuerungsplatine 135 gegenüberliegenden Ende des Elektromotors 13 angekoppelt (vgl. Fig. 3, 5a und 5b). Ein umgekehrter Einbau ist jedoch ebenfalls möglich, wie in Fig. 5c beispielhaft gezeigt.

Zudem verdeutlicht Fig. 5c die Möglichkeit, die Motorwelle 134 als Hohlwelle auszuführen.

Die Erfindung wurde vorstehend anhand eines Ausführungsbeispiels und weiterer Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf das beschriebene Ausführungsbeispiel und Abwandlungen beschränkt, sondern umfasst alle durch die Patentansprüche definierten Ausgestaltungen.

### Bezugszeichenliste

- 1: Steer-by-wire Lenkung
- 2: Fahrzeugrad
- 3: Steuergerät
- 3a: Steuergerät auf Seiten des Lenksäulenmoduls
- 3b: Steuergerät auf Seiten des Lenkgetriebemoduls
- 10: Lenksäulenmodul
- 11: Lenkungshandhabe
- 12: Haptikaktuator
- 13: Elektromotor (Antriebsmotor)
- 131: Rotor
- 132: Stator
- 133: Motorgehäuse
- 1331: erste Kammer
- 1332: zweite Kammer
- 134: Motorwelle
- 135: Steuerungsplatine
- 1351: Kontaktierungsklemme
- 136: Multiturnsensoreinrichtung
- 1361: erster Messgeber (Motorwellenlage-Sensorgeber)
- 1362: zweiter Messgeber (Sensorwellenlage-Sensorgeber)
- 1363: erster Messaufnehmer (Motorwellenlage-Sensor)
- 1364: zweiter Messaufnehmer (Sensorwellenlage-Sensor)
- 1365: Getriebe
- 1365a: erstes Stirnzahnrad (Motorwellen-Stirnrad)
- 1365b: zweites Stirnzahnrad (Sensorwellen-Stirnrad)
- 1366: Sensorwelle
- 1367: Sensorwellenlager
- 137: Lagerschild
- 138: Motorwellenlager
- 139: Motorphasen-Kontaktiereinrichtung
- 1391: elektrische Leitereinrichtung (Kontaktierungselement)
- 14: Welle
- 15: Getriebe
- 20: Lenkgetriebemodul
- 21: Radaktuator
- 22: Lenkgetriebe
- A: Drehachse des Elektromotors

## Patentansprüche

1. Elektromotor (13), umfassend:
einen Rotor (131),
eine Steuerungsplatine (135), auf welcher Einrichtungen zur Steuerung des Elektromotors (13) angeordnet und elektrisch kontaktiert sind,
eine Multiturnsensoreinrichtung (136), die zwischen der Steuerungsplatine (135) und dem Rotor (131) angeordnet ist,
wobei die Multiturnsensoreinrichtung (136) mindestens einen Messaufnehmer (13631,1364) aufweist, der an der Steuerungsplatine (135) angeordnet und elektrisch kontaktiert ist.

2. Elektromotor (13) nach Anspruch 1, **dadurch gekennzeichnet, dass** der Rotor (131) mit einer Motorwelle (134) drehfest verbunden ist, welche an einem Lagerschild (137) mittels eines Motorwellenlagers (138) drehbar gelagert ist, wobei die Multiturnsensoreinrichtung (136) zwischen dem Lagerschild (137) und der Steuerungsplatine (135) angeordnet ist.

3. Elektromotor (13) nach Anspruch 1 oder 2, **dadurch gekennzeichnet, dass** die Multiturnsensoreinrichtung (136) mindestens zwei Singleturn-Sensoren aufweist, deren Messaufnehmer (1363, 1364) jeweils auf der Steuerungsplatine (135) angeordnet sind und deren Messgeber (1361, 1362) mittels eines Getriebes (1365) derart gekoppelt sind, dass deren Übersetzungsverhältnis zum Rotor (131) untereinander verschieden ist.

4. Elektromotor nach Anspruch 3, **dadurch gekennzeichnet, dass** mindestens zwei der Singleturn-Sensoren auf unterschiedlichen Messprinzipien basieren.

5. Elektromotor (13) nach Anspruch 3 oder 4, **dadurch gekennzeichnet, dass** ein erster Messgeber (1361) an einer mit dem Rotor (131) drehfest verbundenen Motorwelle (134) angeordnet ist, und ein zweiter Messgeber (1362) an einer zur Motorwelle (134) parallelen Sensorwelle (1366) angeordnet ist, und die Motorwelle (134) und die Sensorwelle (1366) über besagtes Getriebe (1365) miteinander gekoppelt sind.

6. Elektromotor (13) nach einem der Ansprüche 3 bis 5, **dadurch gekennzeichnet, dass** das Getriebe (1365) mindestens eine Stirnzahnradstufe (1365a, 1365b) oder eine Riemenradstufe aufweist.

7. Elektromotor (13) nach einem der Ansprüche 3 bis 6, **dadurch gekennzeichnet, dass** das Getriebe (1365) zwischen dem Lagerschild (137) und der Steuerungsplatine (135) angeordnet ist.

8. Elektromotor (13) nach einem der Ansprüche 1 bis 7, **dadurch gekennzeichnet, dass** eine Motorphasen-Kontaktiereinrichtung (139) zwischen dem Lagerschild (137) und dem Rotor (131) angeordnet ist und mit der Steuerungsplatine (135) durch elektrische Leitereinrichtungen (1391) elektrisch verbunden ist.

9. Steer-by-wire-Lenkung (1) mit einem Lenksäulenmodul (10), welches eine Lenkungshandhabe (11) zur Eingabe eines fahrerseitigen Lenkbefehls und einen mit dieser mechanisch gekoppelten Haptikaktuator (12) zur Simulation einer Lenkungsrückwirkung an der Lenkungshandhabe (11) aufweist, wobei der Haptikaktuator (12) einen Elektromotor (13) nach einem der vorgenannten Ansprüche umfasst.

10. Steer-by-wire-Lenkung (1) nach Anspruch 9, **dadurch gekennzeichnet, dass** die Lenkungshandhabe (11) an einem der Steuerungsplatine (135) gegenüberliegenden Ende des Elektromotors (13) angekoppelt ist,
und/oder
dass die Lenkungshandhabe (11) mit dem Elektromotor (13) mittels einer Welle (14) gekoppelt ist, die koaxial zur Motorwelle (134) des Elektromotors (13) verläuft.
